# EUROPÄISCHE PATENTSCHRIFT

(11) **EP 1 277 083 B1**
(45) Veröffentlichungstag und Bekanntmachung des Hinweises auf die Patenterteilung: **18.12.2013**
(21) Anmeldenummer: 01909686.6
(22) Anmeldetag: 24.01.2001
(51) Int. Cl.: G02F 3/00, G02F 1/35

(54) **Vorrichtung zur Erzeugung, Addition und Subtraktion digitaler Folgen optischer Pulse**
Device for generating, adding and subtracting digital sequences of optical pulses
Dispositif pour produire, additionner et soustraire des suites numériques d'impulsions optiques

(30) Priorität: 26.02.2000 DE 10009209
(43) Veröffentlichungstag der Anmeldung: 22.01.2003
(73) Patentinhaber: Deutsche Telekom AG, 53113 Bonn (DE)
(72) Erfinder: DULTZ, Wolfgang, 65936 Frankfurt am Main (DE); SCHMITZER, Heidrun, 09123 Chemnitz (DE); BERESNEV, Leonid, Columbia, MD 21044 (US); DULTZ, Gisela, 65936 Frankfurt am Main (DE)
(74) Vertreter: Blumbach Zinngrebe
(86) Internationale Anmeldenummer: PCT/EP2001/000766
(87) Internationale Veröffentlichungsnummer: WO 2001/063353

(56) Entgegenhaltungen:
- WO-A-97/34193

## Beschreibung

Die Erfindung betrifft eine Vorrichtung zur Erzeugung, Addition und Subtraktion digitaler, vorzugsweise binärer Folgen optischer Pulse und ein Verfahren zur sicheren Übertragung von Nachrichten.

Eines der großen Probleme in der Zukunft der Telekommunikation wird darin bestehen, die Sicherheit der Nachrichtenübertragung zu erhöhen und insbesondere die zu übertragenden Nachrichten vor unbefugtem Abhören oder ungewollten Verfälschungen zu bewahren. Eine sicheres Verfahren umfasst die Verschlüsselung der binär kodierten Nachricht durch Addition zu einem stochastischen binären Schlüssel, der so lang ist wie die Nachricht selbst. Es entsteht hierbei eine stochastische binäre Folge, die nur durch Subtraktion des Schlüssels entziffert werden kann. Dieses Verfahren, welches im Englischen "one time pad" heißt, ist absolut sicher, wenn der Schlüssel, der so lange wie die Nachricht selbst ist, nur einmal verwendet wird.

Das Dokument WO 97/34193 A (MASSACHUSETTS INST TECHNOLOGY, 18. September 1997 (1997-09-18)) beschreibt eine elektrooptische Vorrichtung zur Erzeugung und zur Addition und/oder Subtraktion von binären optischen Pulsfolgen mit einem zumindest zwei Teilzweige enthaltenden Interferometer. Durch die Addition bzw. Subtraktion einer in der Form einer optischen Pulsfolge kodierten digitalen Nachricht und eines ebenfalls in der Form einer optischen Pulsfolge kodierten binären Schlüssels kann die digitale Nachricht verschlüsselt bzw. entschlüsselt werden.

Der Erfindung liegt die Aufgabe zu Grunde, das vorstehend beschriebene Verfahren auf zuverlässige Weise auch mit optischen Signalen zu ermöglichen.

Diese Aufgabe wird durch eine Vorrichtung nach Anspruch 1 und ein Verfahren gemäß Anspruch 9 gelöst.

Ein erfindungsgemäß bevorzugtes Kommunikationssystem ist in Anspruch 11 definiert.

Optische Signale sind aufgrund ihrer prinzipiell extrem hohen Ausbreitungsgeschwindigkeit, zusammen mit deren parallelen Verarbeitungsmöglichkeiten und der Kombinierbarkeit mit vorhandenen elektronischen nachrichtentechnischen Geräten von stark zunehmendem Interesse.

Die stochastische Binärfolge, die als Schlüssel dient, kann zum Beispiel mit Hilfe eines optischen Zufallsgenerators generiert werden oder kann elektronisch gewonnen und in ein optisches Signal gewandelt werden.

Die Erfindung wird nachfolgend anhand bevorzugter Ausführungsformen und unter Bezugnahme auf die beigefügten Zeichnungen detaillierter beschrieben.
Es zeigen:
- Figur 1:: ein Schema des Additions- bzw. Subtraktionselements auf der Grundlage eines Mach-Zehnder Interferometers zur genauen Abstimmung kann der Spiegel S3 z.B. durch ein Piezoelement hin und her gefahren werden,
- Figur 2:: eine Qualitative Darstellung der Addition der Pulsfolge Al zur Pulsfolge B1. 01 stellt die addierte Folge im Ausgang 01 des Interferometers aus Fig. 1 dar, wobei 02 ist die Pulsfolge im anderen Ausgang 02 darstellt.

### Detaillierte Beschreibung der Erfindung

Die Erfindung umfaßt optische Anordnungen, die es erlauben, zwei Lichtpulsfolgen zu generieren und dann optisch zu addieren oder zu subtrahieren.

Bei einer Ausführungsform der hier beschriebenen Erfindung werden, vorab in Kürze zusammengefasst, zwei optische Pulsfolgen A und B aus vorliegenden elektronischen Pulsfolgen generiert. Eine davon trägt z.B. die Information, die andere den stochastischen Schlüssel. Zur optischen Addition der Zufallsfolge zu der optischen Pulsfolge, die die Information enthält, dient die Interferenz zwischen den beiden synchronen Pulsfolgen. Das hierzu benötigte Element wird im folgenden eingehender beschrieben.

Das binäre Additionselement soll die direkte Addition optischer Binärinformationen ermöglichen, also: 0 + 0 = 0, 1 + 0 = 0 + 1 = 1, 1 + 1 = 0. Da die Subtraktion im binären, einziffrigen Zahlenraum der Addition entspricht, kann das Element damit auch subtrahieren: 0 - 0 = 0, 1 - 0 = 0 - 1 = 1, 1 - 1 = 0.

Das hier beschriebene optische Element erzeugt aus einem kontinuierlichen, ungepulsten, kohärenten Lichtstrahl oder einer monotonen Folge kohärenter optischer Pulse zwei unterschiedlich kodierte binäre Pulsfolgen, wobei die Kodierung extern beliebig vorgegeben werden kann. Die beiden Pulsfolgen A, B werden anschließend interferometrisch addiert bzw. subtrahiert und als Ausgangssignale 01 und 02 in dem Ausgang 01 bzw. 02 erhalten.

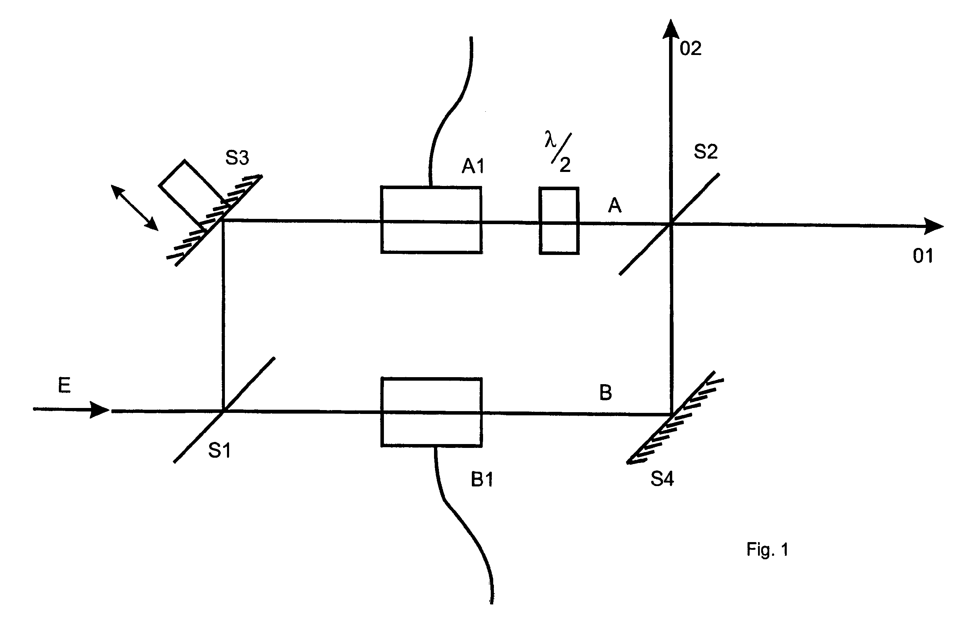

Figur 1 zeigt als erste bevorzugte Ausführungsform eine Mach-Zehnder Interferometeranordnung, die es erlaubt mit Hilfe von zwei elektrooptischen Schaltern A1, B1, die elektronisch vorliegenden Pulsfolgen einer monotonen, kohärenten, optischen Pulsfolge oder einem kontinuierlichen, kohärenten Lichtstrahl im Eingang E des Interferometers aufzuprägen.

Es sind erfindungsgemäß ferner zweidimensionale Signale, verarbeitbar, wenn die elektrooptischen Schalter und Modulatoren mit einem abbildendem System eingesetzt werden. Derartige Systeme können beispielsweise mit einer Sammellinse aufgebaut werden, die außerhalb des Interferometers angeordnet ist und in deren Objektebene die zweidimensionalen elektrooptischen Modulatoren oder Schalter stehen. Ferner können zwei sehr ähnliche Sammellinsen innerhalb des jeweiligen Teilzweigs des Interferometers angeordnet sein, in jedem Falle werden dann die Nutzsignale in der Bildebene des optischen Systems erhalten.

Bei hoher örtlicher Kohärenz, dies bedeutet bei einer kleinen, bzw. punktförmigen Lichtquelle oder sehr paralleler optischer Strahlung sind auch zeitlich stark inkohärente Signale, dies bedeutet breitbandige Signale möglich, da das Mach-Zehnder-Interferometer und die nachfolgend namentlich benannten Interferometer sogenannte Weißlicht-Interferomenter sind, welche bei einer optischen Wegdifferenz der beiden Interferometerarme von weniger als etwa 3 µm hervorragend für die Erzeugung von Weißlicht-Interferenzmustern geeignet sind. Dadurch kann beispielsweise ein einziges stochastisches Signal, das in einem der Teilzweige eingespeist wird für eine Vielzahl spektral getrennter optischer Frequenzen verwendet werden. Bei einem Abgleich der optischen Weglänge um den Differenzbetrag etwa gleich Null oder kleiner als 0,5 µm herum, kann im wesentlichen fast das gesamte optische Spektrum gleichzeitig ausgenutzt werden, da diese Bedingung dann etwa der optischen destruktiven Weißlichtinterferenz entspricht.

Gemäß Figur 1 spaltet der Spiegel S1 die monotone Pulsfolge in zwei monotone Pulsfolgen von halber Intensität auf. Die Modulatoren A1, B1 prägen den beiden monotonen Pulsfolgen den, die jeweilige Information enthaltenden Kode auf.

Der eine Kode ist z.B. ein stochastischer binärer Schlüssel, der andere enthält die binär verschlüsselte Nachricht. Eine der beiden Pulsfolgen erhält eine Phasenverschiebung von einer halben Wellenlänge z.B. durch eine λ/2 Verzögerung.

Die beiden Pulsfolgen werden dann am Spiegel S2 zur Interferenz gebracht. Ist das Interferometer richtig abgestimmt, so verläßt am Ausgang O1 eine Pulsfolge das Interferometer, die einer Summe oder Differenz der binäre Pulsfolgen A, B in den beiden Armen des Interferometers entspricht. Das Interferometer ist dabei so abgestimmt, daß die optischen Wege in den beiden Armen gleich sind.

Die zusätzliche λ/2 Verzögerung bewirkt, daß Pulse, die in beiden Armen auftreten, so interferieren, daß diese das Interferometer am Ausgang 02 verlassen.

Pulse, die nur in einem Arm auftreten, verlassen das Interferometer in beiden Ausgängen O1 und 02.

Pulse, die in keinem der Arme auftreten, treten in keinem der Ausgänge auf. Daher findet man nur im Ausgang O1 eine binäre Summe bzw. Differenz der beiden Pulsfolgen.

Läßt man die λ/2 Verzögerungsplatte weg, so tritt die Summe bzw. Differenz im Ausgang 02, nicht aber im Ausgang 01 auf.

Wichtig ist es, daß die elektrooptischen Schalter in beiden Armen die gleichen zusätzlichen optischen Wege einführen. Ist dies nicht der Fall, so kann man den optischen Weg in einem der Arme, z.B. durch Verschieben des Spiegels S3 verlängern oder verkürzen, so daß die optischen Wege in den Armen wieder gleich werden.

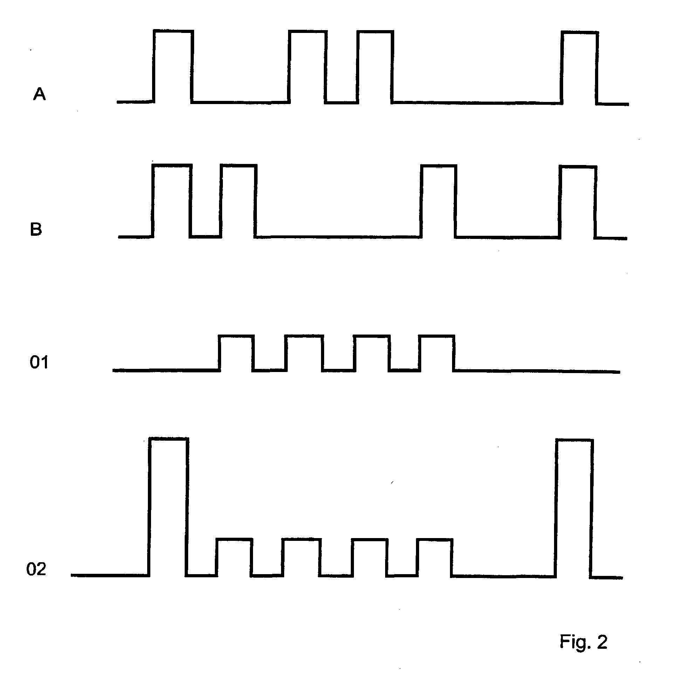

In Figur 2 ist eine Addition zweier Pulsfolgen A, B mit Hilfe dieses Verfahrens als Beispiel aufgezeichnet. Die Pulsfolge A wird zur Pulsfolge B addiert, synchrone Pulse in beiden Folgen werden im Ausgang 02 beobachtet. Die Anordnung Fig. 1 mit λ/2 Verzögerung wurde dabei benutzt.

Die Pulshöhen in Fig. 2 stellen die Verhältnisse nur qualitativ dar und sind nicht maßstabsgetreu.

Das Prinzip des hier beschriebenen Additions- bzw. Subtraktionselementes besteht also darin, daß zwei kohärente optische Pulse durch eine Phasenverschiebung von λ/2 interferometrisch in einem Ausgang zu Null gemacht werden und das Interferometer in einem anderen Ausgang verlassen. Dabei kommt es im wesentlichen nicht auf die Art des Interferometers an.

Alle Zweistrahlinterferometer können als Grundlage für das Additions- bzw. Subtraktionselement dienen. Mögliche weiteren Anordnungen neben dem Mach-Zehnder-Interferometer sind z.B. das Michelson-Interferometer oder das Jamin-Interferometer.

Notwendig ist nur die räumliche Aufteilung eines kohärenten Lichtstrahls in zwei Teile, das Aufprägen der beiden Pulskodierungen auf die beiden Teilstrahlen und das anschließende interferometrische Überlagern entweder ohne Phasenverschiebung oder mit einer Phasenverschiebung von λ/2 je nachdem, welchen Ausgang des Interferometers man benutzen will.

Es können bei monochromatischem Licht auch ganze Vielfache der Wellenlängen zu diesen Phasenverschiebungen addiert werden. Solange die gesamte optische Wegdifferenz innerhalb der Kohärenzlänge bleibt, gilt diese Aussage auch für polychromatisches Licht. Die Technik dafür ist vorhanden und umfasst beispielsweise Verzögerungsplatten oder bewegliche Elemente (z.B. Spiegel) des Interferometers.

Ferner ist es im Sinne der Erfindung nicht nötig, daß am Eingang des Interferometers bereits ein monotoner Pulszug eingespeist wird. Die Pulserzeugung kann beispielsweise auch durch die elektrooptischen Modulatoren oder Schalter in den Armen des Interferometers zusammen mit der Kodierung erfolgen.

Der Einsatz des Additionselementes in der Telekommunikation macht es sinnvoll, alle optischen Elemente durch entsprechende Elemente aus optischen Glasfasern zu ersetzen, z.B. die halbdurchlässigen Spiegel durch Faserkoppler usw.

Auch eine Realisierung der Erfingung in integrierter Optik ist auf vorteilhafte Weise möglich.

## Patentansprüche

1. Elektrooptische Vorrichtung zur Erzeugung, Addition und/oder Subtraktion von binären optischen Pulsfolgen, mit einem Interferometer, **dadurch gekennzeichnet, dass** zumindest ein elektrooptischer Schalter oder Modulator in einem der Teilzweige des Interferometers und ein weiterer elektrooptischer Modulator oder Schalter in dem weiteren Zweig des Interferometers angeordnet sind, und die Interferenz zwischen binären optischen Signalen erzeugt ist, die durch die elektrooptischen Schalter oder Modulatoren erzeugt sind.

2. Elektrooptische Vorrichtung nach Anspruch 1, **dadurch gekennzeichnet, daß** das Interferenzmuster durch eine Phasenverschiebung in den elektrooptischen Schaltern oder Modulatoren erzeugt ist.

3. Elektrooptische Vorrichtung nach Anspruch 1, **dadurch gekennzeichnet, daß** das Interferenzmuster durch eine Phasenverschiebung in einem der elektrooptischen Schalter oder Modulatoren entsprechend einem stochastischen digitalen optischen Signal erzeugt ist.

4. Elektrooptische Vorrichtung nach einem der vorstehenden Ansprüche, **dadurch gekennzeichnet, daß** das Interferometer ein Mehrstrahlinterferometer und insbesondere ein Zweistrahlinterferometer ist.

5. Elektrooptische Vorrichtung nach Anspruch 4, **dadurch gekennzeichnet, daß** das Interferometer ein Mach-Zehnder-, ein Michelson- oder ein Jamin-Interferometer ist.

6. Elektrooptische Vorrichtung nach einem der vorstehenden Ansprüche, **dadurch gekennzeichnet daß** die Modulatoren oder Schalter zweidimensionale ortsaufgelöste Modulatoren oder Schalter sind.

7. Elektrooptisches Vorrichtung nach einem der vorstehenden Ansprüche, **dadurch gekennzeichnet, daß** die einzelnen optischen Elemente faseroptische Elemente sind.

8. Elektrooptische Vorrichtung nach einem der vorstehenden Ansprüche, **dadurch gekennzeichnet, daß** die optischen Elemente integriert-optische Elemente sind.

9. Verfahren zur sicheren Übertragung von Nachrichten mittels optischer Signale, bei welchem die Erzeugung von optischen Pulsfolgen in einer Vorrichtung gemäß einem der Ansprüche von 1 bis 8 erfolgt.

10. Verfahren nach Anspruch 9, **dadurch gekennzeichnet, daß** in einem Zweistrahlinterferometer mit elektrooptischen Schaltern oder Modulatoren, in den beiden Armen Phasenverschiebungen erzeugt werden und immer wenn eine Überlagerung von zwei Lichtpulsen am Ausgang des Interferometers vorliegt, der genutzte Ausgang die destruktive Interferenz der beiden Pulse enthält.

11. Kommunikationssystem umfassend eine Vorrichtung und ein Verfahren nach einem der vorstehenden Ansprüche.

## Claims

1. Electro-optical device for generating, adding and/or subtracting binary optical pulse sequences, having an interferometer
**characterised in that** at least one electro-optical switch or modulator is disposed in one of the branch sections of the interferometer and a further electro-optical modulator or switch is disposed in the further branch of the interferometer, and
the interference is generated between binary optical signals which are generated by the electro-optical switches or modulators.

2. Electro-optical device as claimed in claim 1, **characterised in that** the interference pattern is generated by a phase shift in the electro-optical switches or modulators.

3. Electro-optical device as claimed in claim 1, **characterised in that** the interference pattern is generated by a phase shift in one of the electro-optical switches or modulators according to a stochastic digital optical signal.

4. Electro-optical device as claimed in any one of the preceding claims, **characterised in that** the interferometer is a multi-beam interferometer and in particular a two-beam interferometer.

5. Electro-optical device as claimed in claim 4, **characterised in that** the interferometer is a Mach-Zehnder, a Michelson, or a Jamin interferometer.

6. Electro-optical device as claimed in any one of the preceding claims, **characterised in that** the modulators or switches are two-dimensional spatially resolved modulators or switches.

7. Electro-optical device as claimed in any one of the preceding claims, **characterised in that** the individual optical elements are fibre-optic elements.

8. Electro-optical device as claimed in any one of the preceding claims, **characterised in that** the optical elements are integrated optical elements.

9. Method for secure transmission of information by means of optical signals, in which optical pulse sequences are generated in a device in accordance with any one of claims 1 to 8.

10. Method as claimed in claim 9, **characterised in that** in a two-beam interferometer having electro-optical switches or modulators, phase-shifts are generated in the two arms and when there is a superposition of two light pulses at the output of the interferometer, the utilised output contains the destructive interference of the two pulses.

11. Communication system comprising a device and a method as claimed in any one of the preceding claims.

## Revendications

1. Dispositif électro-optique pour la génération, l'addition et/ou la soustraction de séquences d'impulsions optiques binaires, avec un interféromètre, **caractérisé en ce qu'**au moins un commutateur ou modulateur électro-optique est disposé dans une des branches de l'interféromètre, et un autre modulateur ou commutateur électro-optique est disposé dans l'autre branche de l'interféromètre, et **en ce que** l'interférence est générée entre signaux optiques binaires générés par les commutateurs ou modulateurs électro-optiques.

2. Dispositif électro-optique selon la revendication 1, **caractérisé en ce que** le motif d'interférence est généré par un décalage de phase dans les commutateurs ou modulateurs électro-optiques.

3. Dispositif électro-optique selon la revendication 1, **caractérisé en ce que** le motif d'interférence est généré par un décalage de phase dans un des commutateurs ou modulateurs électro-optiques en fonction d'un signal optique numérique stochastique.

4. Dispositif électro-optique selon l'une des revendications précédentes, **caractérisé en ce que** l'interféromètre est un interféromètre à plusieurs faisceaux, et en particulier un interféromètre à deux faisceaux.

5. Dispositif électro-optique selon la revendication 4, **caractérisé en ce que** l'interféromètre est un interféromètre de Mach-Zehnder, un interféromètre de Michelson ou un interféromètre de Jamin.

6. Dispositif électro-optique selon l'une des revendications précédentes, **caractérisé en ce que** les modulateurs ou commutateurs sont des modulateurs ou des commutateurs à résolution spatiale bidimensionnels.

7. Dispositif électro-optique selon l'une des revendications précédentes, **caractérisé en ce que** les différents éléments optiques sont des éléments à fibres optiques.

8. Dispositif électro-optique selon l'une des revendications précédentes, **caractérisé en ce que** les éléments optiques sont des éléments optiques intégrés.

9. Procédé de transmission sûre de messages au moyen de signaux optiques, où la génération de séquences d'impulsions optiques est réalisée dans un dispositif selon l'une des revendications 1 à 8.

10. Procédé selon la revendication 9, **caractérisé en ce que** dans un interféromètre à deux faisceaux à commutateurs ou modulateurs électro-optiques, des décalages de phase sont générés dans les deux bras, et **en ce que**, si un chevauchement de deux impulsions lumineuses est présent à la sortie de l'interféromètre, la sortie utilisée contient toujours l'interférence destructive des deux impulsions.

11. Système de communication comprenant un dispositif et un procédé selon l'une des revendications précédentes.
